Europäisches Patentamt

European Patent Office

Office européen des brevets

(19)

(11) Publication number: **0 042 276**
A1

(12) # EUROPEAN PATENT APPLICATION

(21) Application number: **81302641.6**

(22) Date of filing: **15.06.81**

(51) Int. Cl.³: **G 01 L 19/12, B 23 K 37/00, H 01 H 35/24**

(30) Priority: **17.06.80 GB 8019793**
**15.07.80 GB 8023132**

(43) Date of publication of application: **23.12.81**
**Bulletin 81/51**

(84) Designated Contracting States: **AT BE CH DE FR IT LI NL SE**

(71) Applicant: **O'Dell, Raymond Joseph Albert, 43A Wicklands Avenue, Saltdean Brighton East Sussex (GB)**

(72) Inventor: **O'Dell, Raymond Joseph Albert, 43A Wicklands Avenue, Saltdean Brighton East Sussex (GB)**

(74) Representative: **Kirby, Harold Douglas Benson et al, G.F. Redfern & Company Marlborough Lodge 14 Farncombe Road, Worthing West Sussex BN11 2BT (GB)**

(54) **Improvements in or relating to warning systems.**

(57) The invention provides a warning system for use with a high-pressure gas cylinder connected through a pressure-reducing regulator 3 to a utilisation device such as an oxyacetylene welding tool. In one embodiment, a T-connector 8 is inserted in the connection to the utilisation device so that pressure may be applied to a pressure switch 13. This switch is mounted in a housing 10 together with a battery 12 and an audible warning device 14. In another embodiment, the warning is triggered off by movement of the Bourdon tube 22 in a pressure gauge 6 and, in a third embodiment, the warning device is controlled by movement of the diaphragm in the regulator 3 itself.

1

IMPROVEMENTS IN OR RELATING TO WARNING SYSTEMS:

This invention relates to a warning system for use with a high-pressure gas cylinder connected through a pressure-responsive regulator to a utilisation device. The invention is particularly applicable to a warning system for use when the utilisation device is an oxyacetylene welding or cutting tool.

An oxyacetylene welding tool is normally connected to a cylinder containing oxygen at high pressure and a further cylinder containing acetylene gas at high pressure. The connection between each cylinder and the tool normally includes a shut-off valve and a regulator valve mounted directly on the cylinder, and a flexible pipe or hose leading from the outlet of the regulator to a tap on the welding tool. Usually the shut-off valve on the cylinder is opened when the operator commences work and may be left open even when the taps on the welding tool have been turned off. In fact, the shut-off valves on the cylinders may be left open all day, and the intention may be to turn them off when the operator leaves his place of work in the evening. However, it may happen that the shut-off valve is left open even during the night.

2

If the regulator on a cylinder worked perfectly, the pressure on the low-pressure side of the regulator would remain constant whether the taps on the welding tool were open or closed. However, in practice, the regulator does not normally work perfectly with the result that, when the taps on the welding tool are turned off, the pressure on the low-pressure side of the regulator gradually increases. Consequently, if the taps on the welding tool remain closed for any length of time, a potentially dangerous situation could arise. For example, the pressure in the flexible pipe could rise to such an extent that leakage occurred, or even that the pipe itself fractured or one of the connections separates. Even if the pressure does not cause actual disruption of the connections, it may increase sufficiently to cause leakage which, at best, may be expensive and, at worst, may produce a potentially explosive or poisonous atmosphere.

Accordingly, it is an object of the present invention to provide a warning system to indicate to an operator that the shut-off valve on the cylinder has been left on after the corresponding tap on the welding gun has been turned off.

The invention consists in a warning system for use with a high-pressure gas cylinder connected through a pressure-reducing regulator to a utilisation device, said system comprising means responsive to the pressure on the low-pressure side of the regulator to operate switching means to activate a warning device when the said pressure rises above a predetermined limit.

3

As already stated, one particular application of the present invention is to oxyacetylene welding apparatus. It will be understood that, when the invention is applied to such apparatus, it will provide a warning to the operator of the apparatus if the pressure on the low-pressure side of the regulator rises as a result of the taps on the gas cylinders having been left on for an appreciable period of time after the taps on the welding tool itself have been turned off. Preferably the warning device provides an audible warning, for example, either a continuous or an interrupted high-pitch note.

In one embodiment of the invention, a T-connector is inserted between the outlet of each regulator and the respective flexible pipe leading to the welding tool, and the third port of the connector is coupled to a pressure-operated switch. This switch may be mounted in a housing which also contains a battery and an audible warning device, the arrangement being such that the whole unit is supported by the T-connector.

. In an alternative embodiment which may be used when the apparatus includes a gauge indicating the pressure on the low-pressure side of the regulator, part of the gauge itself is used to operate the switching means. The pressure gauge will normally include a Bourdon tube and movement of this tube may be used to operate the switching device. For this purpose, an inductor may be located in the vicinity of the Bourdon tube, said inductor being electrically connected to an electronic oscillator and an electronic timing device so that the timing cycle of the timing device is initiated when the Bourdon tube approaches to within a predetermined distance from the inductor. Preferably the length of the
timing cycle of the timing device is made manually adjustable.
Once again the oscillator and timing device may be located
in a housing also containing a battery and an audible warning
device. This housing may be secured to the back of the pressure
gauge.

In another embodiment of the invention, the regulator
itself is used to actuate the switching means. Normally the
regulator will include a metal diaphragm and movement of this
diaphragm may be used to control the inductance of an inductor
located in the housing of the regulator itself. This inductor
may be connected to an oscillator in the same way as described
above in connection with the second embodiment.

In yet another embodiment of the invention, a T-connector
is used as in the first embodiment, but the third port of the
connector is coupled to a pressure-controlled inductor or capacitor instead of to a pressure-operated switch. The variable
capacitor or inductor is connected in an oscillator circuit
similar to that referred to in connection with the embodiment
utilising the pressure gauge.

It is to be understood that the invention may be
applied to any pressure gas cylinder connected to a utilisation
device. For example, it may be applied to a cooking stove,
or space heater connected to a cylinder of inflammable
gas such as Butane or Propane.

The invention may also be applied to cutting
equipment as used, for example, in steel foundaries and
scrap yards, and on oil rigs.

5

Embodiments of the invention will now be described with reference to the accompanying diagrammatic drawings, in which:-

Figure 1 is a front elevation partly in section of a first embodiment of the invention;

Figure 2 is a front elevation of a second embodiment of the invention;

Figure 3 is a sectional side view of a part of the apparatus shown in Figure 2 taken on the line 3:3 looking in the direction of the arrows;

Figure 4 is a cross-sectional view of the part shown in Figure 3 taken on the line 4:4 looking in the direction of the arrows; and

Figure 5 is a rear view of a part of a third embodiment of the invention.

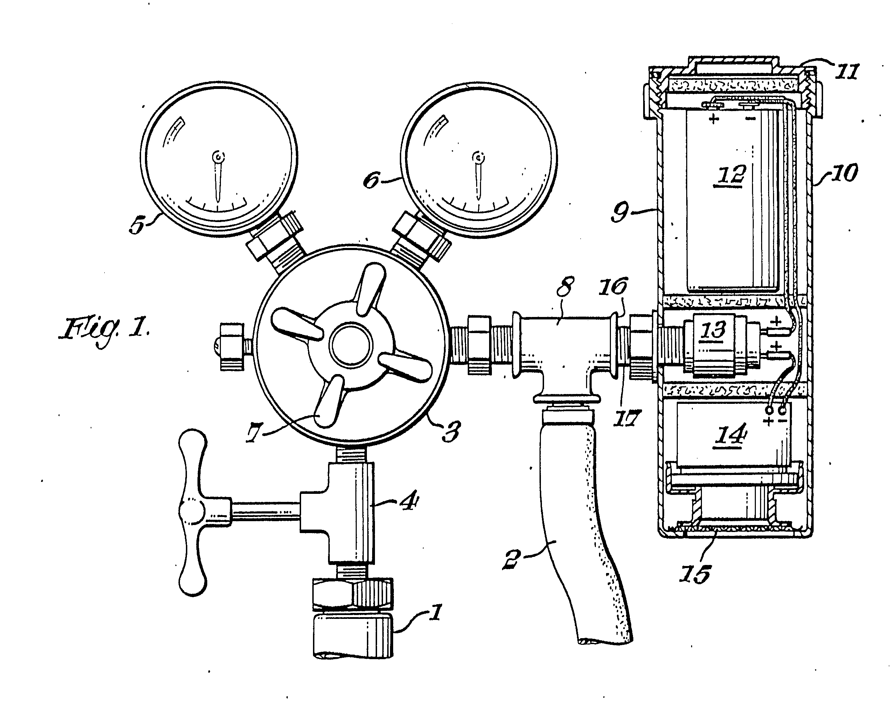

Figure 1 shows the outlet 1 of a high-pressure gas cylinder connected to a utilisation device (not illustrated) through a flexible pipe 2, a regulator valve 3, and a shut-off valve 4. The utilisation device may be, for example, an oxyacetylene welding tool and, in this case, the gas contained in the cylinder may be either oxygen or acetylene. The shut-off valve 4 is used to prevent gas leaving the cylinder, and the regulator valve 3 is used to control the gas pressure in the pipe 2. A gauge 5 is provided to measure the pressure in the cylinder 1, while a pressure gauge 6 is provided to measure the pressure in the pipe 2. The pressure in the pipe 2 may be set to a required value by means of a manual control 7.

6

In accordance with the present invention, the pipe 2 is connected to the outlet of the regulator valve 3 through a T-connector 8, the third port 16 of the T-connector being coupled to a warning unit 9.

The warning unit includes a housing 10 having a removable cap 11. The housing contains a battery 12 electrically connected through a pressure-operated switch 13 to an audible alarm device 14. The circuit arrangement is such that, when the contacts of the pressure switch are closed, the battery is connected to the alarm device so that it emits, for example, a high-pitch audible note. The sound from the device 14 is transmitted through a grill 15 in the end of the housing 10.

The port 16 of the T-connector 8 is connected through a rigid pipe 17 to the pressure switch 13 so that the switch 13 is controlled by the gas pressure in the connector 8.

As already explained, when the apparatus is in use, the shut-off valve 4 is opened and the regulator valve 3 is adjusted to provide the required working pressure. When welding is actually being carried out, the taps on the welding tool are opened and the setting of the regulator valve may be such that, for example, the pressure is about $10lb/in^2$. When the taps on the welding tool are turned off, the gas pressure in the pipe 2 will tend to increase because some gas will pass from the high-pressure side of the regulator to the low-pressure side. The amount of gas passing through the regulator valve may be quite small in the case of a new valve, but may be considerably higher in the case of a worn regulator valve.

After a period of time, which will depend on the state of the regulator valve, the pressure in the pipe 2 will increase to such an extent that the pressure switch 13 will be actuated to close its contacts. The device 14 will then emit an audible alarm, warning the operator to turn off the gas at the shut-off valve 4.

Preferably the pressure at which the switch 13 operates is chosen to give a delay of four or five minutes in combination with the particular regulator valve in use. However, since, as already stated, the characteristics of regulator valves tend to vary quite considerably, it may be desirable to make the delay period adjustable. Rather than using an ajustable pressure switch, it may be advantageous to include an electronic variable delay device between the pressure switch and the device 14. Such electronic delay devices are readily available and may be adjusted to give the required time delay.

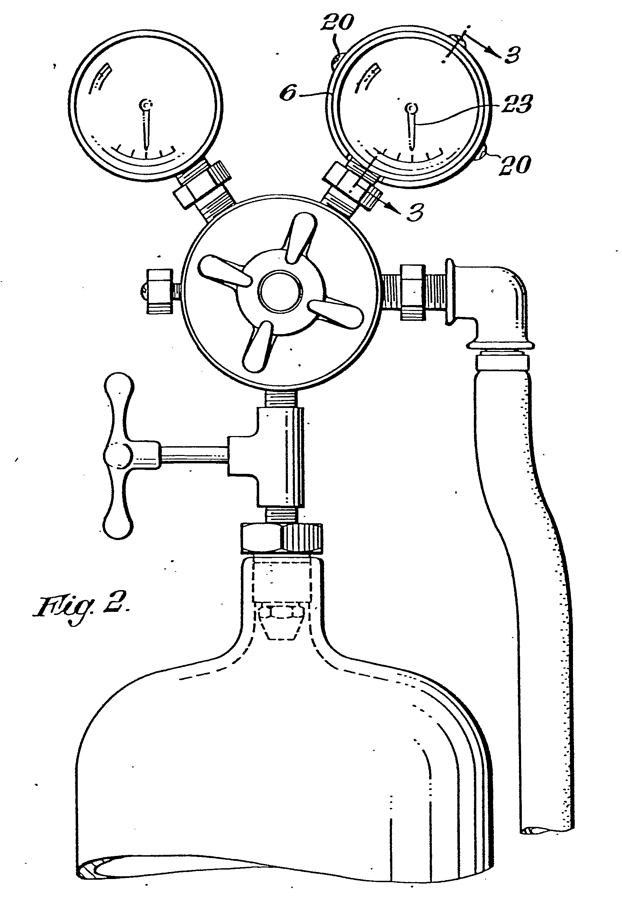

Figures 2, 3 and 4 show an alternative embodiment of the invention in which the low-pressure gauge 6 is itself used to operate the audible alarm when the pressure indicated by the gauge exceeds a predetermined limit. For this purpose, the back of the standard gauge is removed and replaced by a housing 19 generally similar to the housing 9 of the first embodiment. The housing may be held in position, for example, by screws 20.

8

The housing again contains a battery 12 and an audible warning device 14. The battery 12 is connected to the warning device through an electronic timing device 21.

The pressure gauge 6 includes a Bourdon tube 22 connected to a pointer 23 through linkage 24. As seen in Figure 4, when the pressure at the inlet to the gauge increases, the Bourdon tube 22 tends to straighten and, accordingly, the upper part of the tube approaches nearer to the casing of the gauge. To make the gauge suitable for use in this embodiment of the invention, it is modified by the provision of an inductor 25 wound on a plastic strip 26 which is secured in the casing. The two ends of the inductor 25 are electrically connected to the timing device 21 by means of flexible wires 27. The timing device 21 includes an oscillator, a part of which is constituted by the inductor 25. The inductance of the inductor is varied by movement of the Bourdon tube 22, and the circuit is arranged so that the timing cycle of the timing device commences when the Bourdon tube approaches close to the inductor 25. The length of the timing cycle may be adjusted by means of a knob 28 and, when the timing cycle ends, terminals 29 and 30 on the timing device 21 are electrically connected so that the battery 12 is connected to the audible warning device 14.

9

It is to be understood that the inductor 25 is shown only by way of example. If desired, it may be replaced by an inductor surrounding the link 31. If desired, the existing link 31 may be replaced by a link consisting, for example, of a ferrite material in order to obtain greater changes in inductance. In yet another arrangement, a light source and a photoelectric cell are provided in the gauge, the arrangement being such that light from the source normally falls on the photoelectric cell, but the light being interrupted when the Bourdon tube moves towards the casing. In yet another possible arrangement, a variable resistor, capacitor or inductor is controlled by an extension of the spindle on which the pointer 23 is carried.

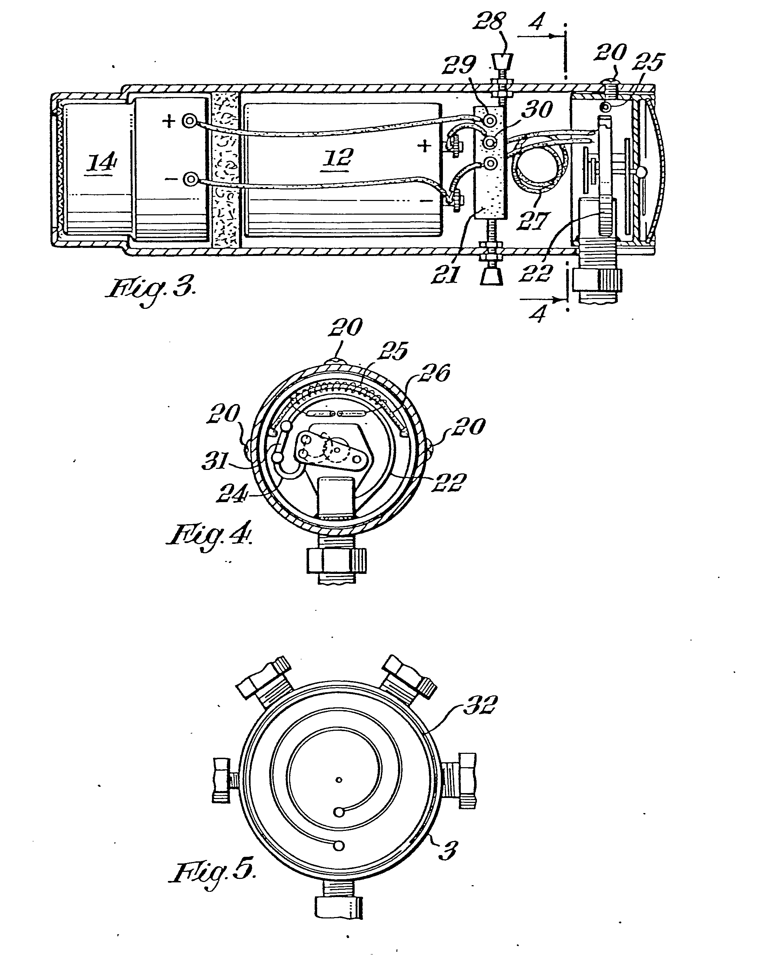

Figure 5 illustrates an embodiment of the invention in which the pressure is sensed by movement of the diaphragm in the pressure regulator 3. In this case, an inductor 32 is located in the housing of the pressure regulator and is electrically connected to a timing device similar to the device 21 illustrated in Figure 3. The inductance of the inductor 32 will be varied by movement of the diaphragm of the regulator valve and, accordingly, the arrangement can be such that the timing cycle will be initiated when the diaphragm approaches to within a predetermined distance from the inductor 32.

10

In a modification of the arrangement shown in Figure 5, a coil of wire is fitted at the centre of the regulator surrounding the valve pin of the regulator.  Preferably a brass or ferrite collar is fitted to the pin so that movement of the pin in response to movements of the diaphragm will change the inductance of the coil accordingly.  Once again, this coil can be connected up as part of an oscillator so that the changes in inductance can be used to operate a warning device.

CLAIMS:

1.      A warning system for use with a high-pressure gas cylinder connected through a pressure-reducing regulator to a utilisation device, said system comprising means responsive to the pressure on the low-pressure side of the regulator to operate switching means to activate a warning device when the said pressure rises above a predetermined limit.

2.      A system as claimed in Claim 1, wherein said pressure-responsive means is in the form of a pressure switch connected so that it responds to the pressure in the connection between the regulator and the utilisation device.

3.      A system as claimed in Claim 2, wherein a T-connector couples the outlet of the regulator to the pressure switch, and also to a flexible pipe leading to the utilisation device.

4.      A system as claimed in Claim 3, wherein said pressure switch is mounted in a housing which also contains a battery and an audible warning device.

5.      A system as claimed in Claim 1, including a gauge indicating the pressure on the low-pressure side of said regulator, and wherein said pressure-responsive means responds to movement of a part of said gauge.

6. A system as claimed in Claim 5, wherein said gauge includes a Bourdon tube, and wherein said pressure-responsive means responds to movement of said Bourdon tube.

7. A system as claimed in Claim 6, wherein said pressure-responsive means includes an inductor located in the vicinity of said Bourdon tube, said inductor being electrically connected to an oscillator and a timing device so that the timing cycle of said timing device is initiated when the Bourdon tube approaches to within a predetermined distance from said inductor.

8. A system as claimed in Claim 7, wherein the length of the timing cycle of said timing device is manually adjustable.

9. A system as claimed in Claim 8, wherein said timing device is located in a housing secured to the back of said gauge, said housing also containing a battery and an audible warning device.

10. A system as claimed in Claim 1, wherein said regulator includes a metal diaphragm which moves in dependence on the pressure on the low-pressure side of the regulator, and wherein movement of said diaphragm is used to actuate said pressure-responsive means.

11. A system as claimed in Claim 10, including an inductor mounted in said regulator so that its inductance depends on the position of said diaphragm, and wherein said inductor is connected to an oscillator, the operating frequency of which depends on the inductance of said inductor.

13

12.    A system as claimed in Claim 11, wherein said oscillator is connected to a timing device arranged so that its timing cycle commences when the operating frequency of said oscillator reaches a predetermined value, and wherein said timing device is arranged to connect a battery to an audible warning device at the end of its timing cycle.

13.    A system as claimed in Claim 1, wherein said pressure-responsive means is in the form of a pressure-controlled variable capacitor or inductor connected in an oscillator circuit so that variations in the value of the variable capacitor or inductor can be used to activate the warning device in response to changes in the operating frequency of the oscillator.

Fig. 1.

0042276

Fig. 2.

3/3

Fig. 3.

Fig. 4.

Fig. 5.

## EUROPEAN SEARCH REPORT

European Patent
Office

**Application number**

EP 81 30 2641

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | US - A - 4 054 763 (D.F.WILLCOX)<br><br>* abstract; figures *<br><br>-- | 1,2 | G 01 L 19/12<br>B 23 K 37/00<br>H 01 H 35/24 |
| | US - A - 3 593 582 (R.J.BIRKMEYER)<br><br>* abstract; figures *<br><br>-- | 1,2,6 | |
| | CH - A - 607 655 (A.G.ADOLPH SAURER)<br><br>* abstract; figure *<br><br>-- | 7,8 | TECHNICAL FIELDS SEARCHED (Int. Cl.³) |
| A | US - A - 3 517 693 (H.G.DIETZ)<br><br>* abstract; figure *<br><br>----------------- | 1 | G 01 L 19/12<br>G 01 L 9/00<br>B 23 K 37/00<br>H 01 H 35/24 |

CATEGORY OF
CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| | The present search report has been drawn up for all claims | | |
| Place of search<br>The Hague | Date of completion of the search<br>24-09-1981 | Examiner<br>VAN ASSCHE | |